# EUROPEAN PATENT SPECIFICATION

(11) **EP 4 234 323 B1**
(45) Date of publication and mention of the grant of the patent: **25.12.2024**
(21) Application number: 23153794.5
(22) Date of filing: 27.01.2023
(51) Int. Cl.: B60N 2/28

(54) **CHILD CAR SEAT ATTACHMENT SYSTEM**
BEFESTIGUNGSSYSTEM FÜR KINDERSITZ
SYSTÈME DE FIXATION POUR SIÈGE ENFANT

(30) Priority: 23.02.2022 IT 202200003344
(43) Date of publication of application: 30.08.2023
(73) Proprietor: Artsana S.p.A., 22070 Grandate (CO) (IT)
(72) Inventor: Gazza, Luca, 22070 Grandate CO (IT)
(74) Representative: Perani & Partners S.p.A.

(56) References cited:
- CN-A- 107 512 204
- KR-B1- 101 867 980
- US-A1- 2011 233 374
- US-B2- 10 906 436

## Description

### Technical Field

The present invention relates to a child car seat attachment system used, for example, on automobiles. More in particular, the present invention relates to a system for attaching, adjusting and quick release for connectors used for fixing a child seat to a seat of a vehicle.

In particular, the technical field is that of attachment systems for child car seats provided with Isofix-type connectors.

### Background art

Child car seat attachment systems are known in the art.

Patent US10906436B2 shows, within a seat, a tensioning belt, connected to two connectors by means of the ends. The patent further shows a traction belt, connected to an intermediate portion of the tensioning belt and passing through a locking mechanism that prevents the movement thereof towards the seat. The tensioning belt is configured to be stretched and, once the maximum extension has been reached, to release the connectors from the seat.

### Problems of the background art

Although the attachment system and attaching the child car seat according to the known art is practical and functional, it is nevertheless usable only in those countries where the regulations allow it. In fact, in other countries the regulations establish that the attachment system is rigid and that therefore the distance between the connectors is always fixed, and cannot change during use. In fact, in the known child car seats the connectors are connected to the respective ends of the tensioning belt and are thus flexible. Therefore, this flexibility of the connectors does not meet the required standards in some countries.

### Object of the Invention

In this context, the technical task underlying the present invention is to propose a child car seat attachment system that overcomes the drawbacks of the prior art mentioned above.

In particular, it is an object of the present invention to provide a rigid attachment system for a child car seat in which the connectors are placed at a fixed distance.

The technical task mentioned and the objects stated are substantially achieved by an attachment system comprising the technical features set out in one or more of the appended claims.

Advantageously, such an attachment system solves the technical problem as it allows the connectors to be kept at a fixed distance in compliance with the aforementioned regulations.

Still advantageously, the connectors of the rigid attachment system allow to increase the stability of the child car seat, once attached to the seat of a car.

Still advantageously, the attachment system of the present invention allows to maintain high standards of safety and reliability, of fundamental importance in the technical field of child car seats.

### LIST OF FIGURES

Further features and advantages of the present invention will become more apparent from the description of an exemplary, but not exclusive, and therefore nonlimiting preferred embodiment, as illustrated in the appended drawings, in which:
- Figure 1 is a perspective view of a child car seat attachment system in which the connectors are in the maximum extraction configuration,
- Figure 2 is a perspective view of a child car seat attachment system of Figure 1 in which the connectors are in the maximum retracted configuration,
- Figure 3 is a top view of the child car seat attachment system of Figure 1,
- Figure 4 is a top view of the child car seat attachment system of Figure 2.

### DETAILED DESCRIPTION

The present invention relates to a child car seat attachment system 1. The attachment system 1 comprises a base 2 having a bottom 3, a front wall 4 and an opposite rear wall 5. It should be noted that the bottom 3 is configured to be positioned on a seat of an automobile seat and the rear wall 5 faces a backrest of the automobile seat. In the preferred embodiment shown in the Figures, the rear wall 5 comprises at least one pair of openings 42, 43.

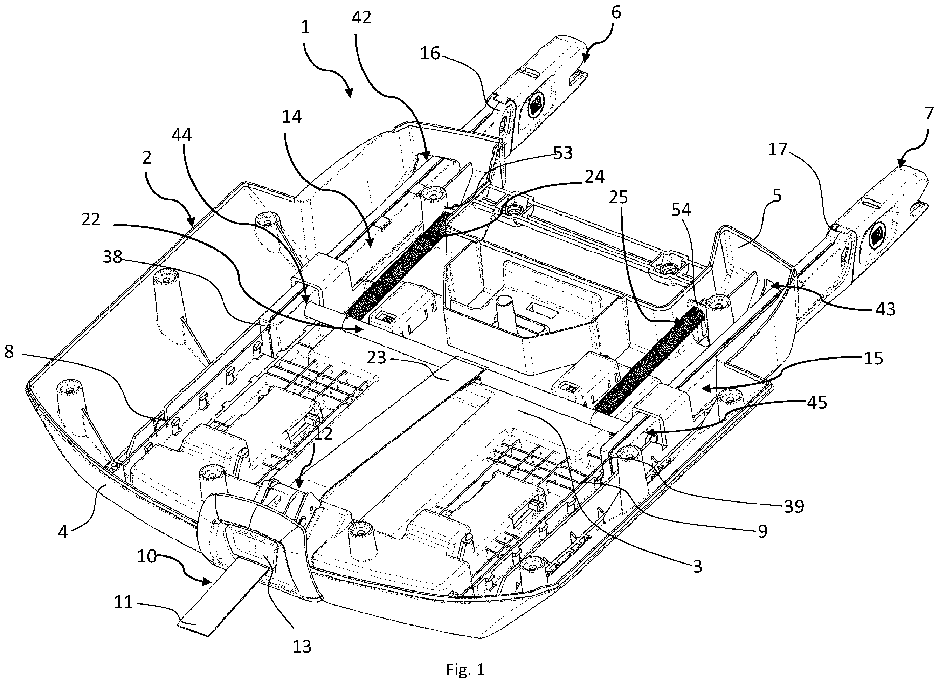

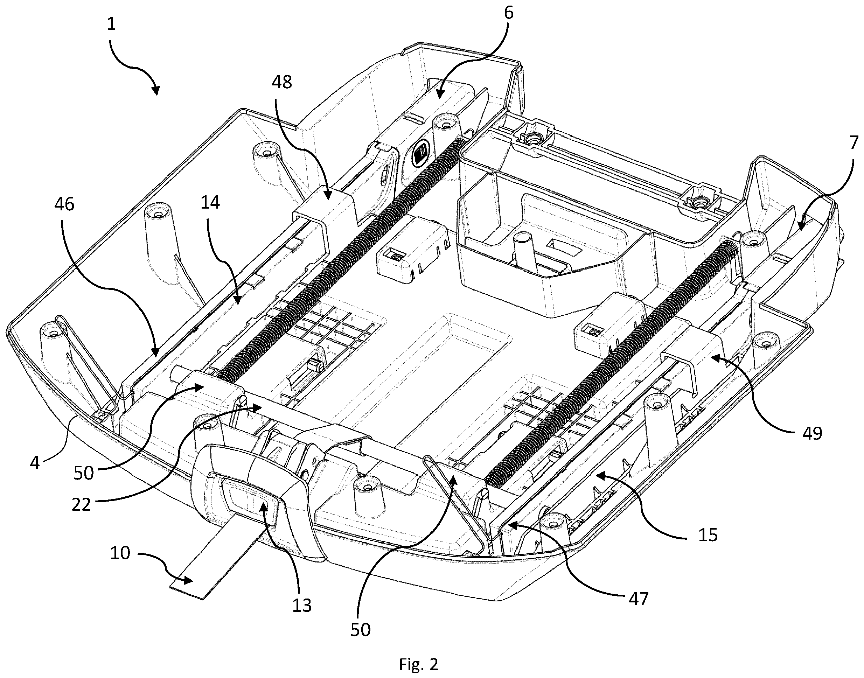

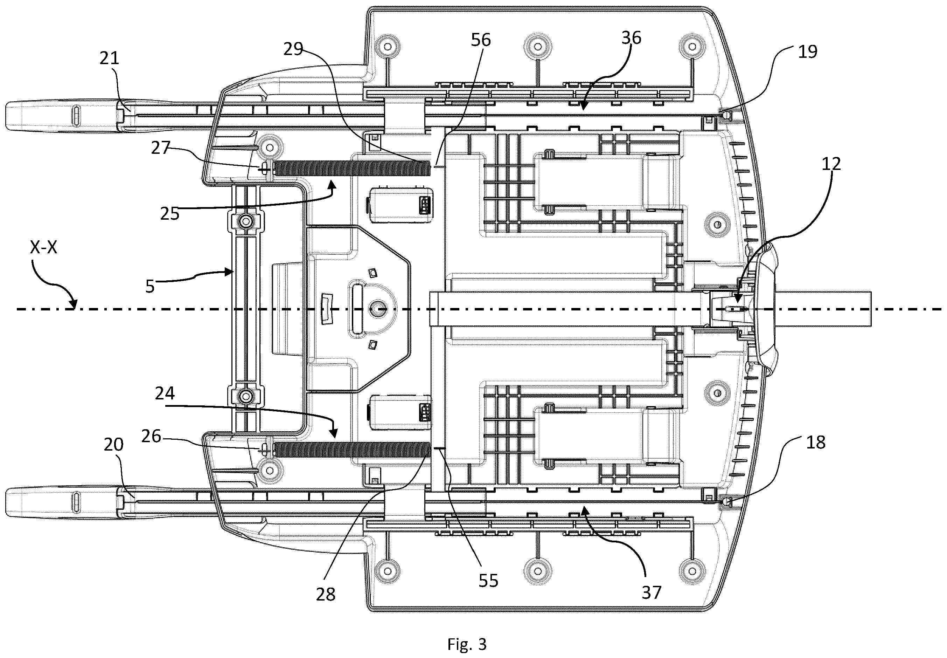

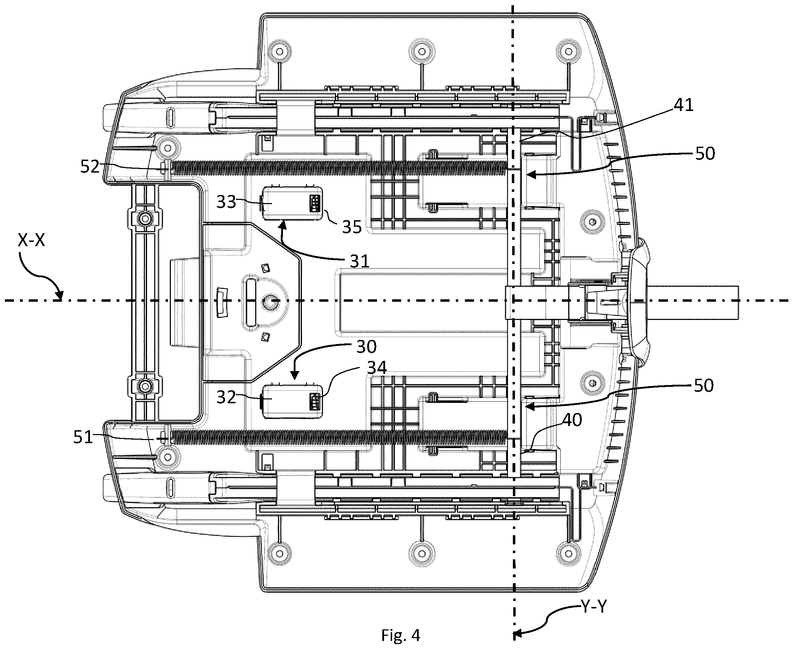

The attachment system 1 comprises a pair of connectors 6, 7, movable along a direction of translation X-X. Each connector 6, 7 is reversibly connectable to anchor means of the seat of a car. Preferably, the connectors 6, 7 are ISOFIX connectors. The pair of connectors 6, 7 is configured to reversibly switch from a position of maximum extraction from the base 2, shown in Figure 1 and 3, to a position of maximum retraction into the base 2, shown in Figure 2 and 4. In particular, in a preferred embodiment, each connector 6, 7 is configured to pass through the respective opening 42, 43 of the rear wall 5.

The attachment system 1 comprises a pair of tensioning cables 8, 9 located inside the base 2 and active on the pair of connectors 6, 7. The pair of tensioning cables 8, 9 reversibly switches from a loose configuration to a stretched configuration. The pair of tensioning cables 8, 9 is configured to release the pair of connectors 6, 7 from the anchor means when the pair of connectors 6, 7 passes into the position of maximum extraction from the base 2. That is, the pair of tensioning cables 8, 9 are in the stretched configuration when the pair of connectors 6, 7 are in the position of maximum extraction from the base 2. The stretched configuration allows a user to detach the pair of connectors 6, 7 from the attachment means of the seat of a car. Once the pair of connectors 6, 7 are released, the tensioning cables 8, 9 pass into the loose configuration. It should be noted that the term "loose configuration" refers to a configuration in which the tensioning cables 8, 9 are not stretched. In particular, in the loose configuration the tensioning cables 8, 9 assume a configuration that gradually becomes looser as the connectors 6, 7 pass from the position of maximum extraction from the base 2 to the position of maximum retraction into the base 2.

In greater detail, each tensioning cable 8, 9 respectively comprises a first end 18, 19 and an opposite second end 20, 21, shown in Figure 3. In particular, the first end 18, 19 of each tensioning cable 8, 9 is connected to the base 2, while the second end 20, 21 of each tensioning cable 8, 9 is connected to a respective connector 6, 7. Preferably, the first end 18, 19 of each tensioning cable 8, 9 is connected to the front wall 4.

The attachment system 1 comprises a pair of rigid rods 14, 15 sliding relative to the base 2 along the direction of translation X-X and integral with the pair of connectors 6, 7. Each rigid rod 14, 15 comprises a first connection end 16, 17 connected to the respective connector 6, 7. It should be noted that, preferably, when the pair of connectors 6, 7 is in the position of maximum extraction, the first connection end 16, 17 projects at least in part from the rear wall 5 through the pair of openings 42, 43.

It should be noted that each rigid rod 14, 15 comprises a through cavity 38, 39 extending along the direction of translation X-X. Furthermore, each tensioning cable 8, 9 is positioned in the through cavity 38, 39 of the respective rigid rod 14, 15. In the preferred embodiment, each rigid rod 14, 15 comprises a hole 44, 45 at a second connection end 46, 47 opposite the first connection end 16, 17, as shown in Figure 2. Preferably, each hole 44, 45 of the pair of rigid rods 14, 15 is a through hole. Preferably, each hole 44, 45 extends along a transverse direction Y-Y, parallel to the bottom 3 and orthogonal to the direction of translation X-X.

In greater detail, the child car seat attachment system 1 comprises a pair of guides 36, 37 extending along the direction of translation X-X. Each guide 36, 37 comprises a respective sleeve 48, 49, each connected to the base 2. Each rigid rod 14, 15 is configured to slide inside the cavity of the respective sleeve 48, 49. Each sleeve 48, 49 comprises a cavity, not visible in the Figures, which extends along the direction of translation X-X. It should be noted that each rigid rod 14, 15 slides along each guide 36, 37 between a stroke start portion of the guide 36, 37, positioned near the front wall 4, and a stroke end portion of the guide 36, 37, positioned near the sleeves 48, 49. In greater detail, each rigid rod 14, 15 is configured to reversibly slide along the direction of translation X-X between the start and end stroke portion of the guide 36, 37.

The attachment system 1 comprises a connecting bar 22 arranged inside the base 2 and movable along the direction of translation X-X. It should be noted that the connecting bar 22 is integral with the pair of rigid rods 14, 15 during the sliding along the direction of translation X-X. In particular, the connecting bar 22 is integral with the pair of connectors 6, 7 and, when the pair of connectors 6, 7 is in the configuration of maximum retraction into the base 2, the connecting bar 22 is abutted with a protrusion 50 which projects from the front wall 4, as shown in Figure 2 and 4. Preferably, the connecting bar 22 has a circular section. In a preferred embodiment, the connecting bar 22 is positioned along the transverse direction Y-Y. The connecting bar 22 comprises a first end 40 and a second end 41, connected to the respective rigid rod 14, 15. Preferably, the first 40 and the second end 41 pass through the respective hole 44, 45 of the pair of rigid rods 14, 15, respectively.

The attachment system comprises a belt 10 passing through the front wall 4 and provided with a first free end 11 projecting out of the base 2. The belt 10 comprises a second end 23 opposite the first free end 11. In more detail, the connecting bar 22 is connected to the second end 23 of the belt 10. Preferably, as shown in Figure 1, the second end 23 forms a slot through which the connecting bar 22 passes. The belt 10 is slidable along the direction of translation X-X to allow the movement of the pair of connectors 6, 7 along the direction of translation X-X between the position of maximum extraction from the base 2 and the position of maximum retraction into the base 2.

The attachment system 1 comprises a locking mechanism 12 mounted on the base 2. In the embodiment shown in the Figures, the locking mechanism 12 is mounted near the front wall 4. The lock 12 is configured to stop the sliding of the belt 10 that brings the free end 11 towards the base 2 and to allow the movement of the belt 10 that brings the free end 11 away from the base 2. In other words, when the belt 10 is stopped by the locking mechanism 12, a user is capable of pulling the belt 10 that brings the free end 11 away from the base 2. In a preferred embodiment, the locking mechanism 12 is a cam locking mechanism.

Furthermore, the locking mechanism 12 comprises an unlocking system 13 operable to allow the belt 10 to slide in the direction towards the base 2. Preferably, the unlocking system 13 is a lever, configured to rotate with respect to the transverse direction Y-Y to allow the sliding of the belt 10 in the direction towards the base 2, and ultimately to release the connectors 6, 7 from the anchor means. In an alternative configuration, shown in Figures 1-4, the unlocking system 13 is a button, mounted on the front wall 4.

The attachment system comprises a pair of pull-out springs 24, 25. Each pull-out spring 24, 25 comprises a fixed end 26, 27 connected to the base 2 and an opposite movable end 28, 29 connected to the connecting bar 22. In a preferred embodiment, each pull-out spring 24, 25 comprises a fixed hook 51, 52, at the fixed end 26, 27, configured to connect each pull-out spring 24, 25 to the base 2. Preferably, as shown in Figure 1, the base 2 comprises a pair of rear supports 53, 54 connected to the bottom 3. The fixed hook 51, 52 of each pull-out spring 24, 25 is configured to attach to the respective rear support 53, 54. In the preferred embodiment, each pull-out spring 24, 25 comprises a movable hook 55, 56, at the movable end 28, 29, configured to connect each pull-out spring 24, 25 to the connecting bar 22.

It should be noted that the pair of pull-out springs 24, 25 is configured to reversibly switch from an extended configuration, shown in Figures 2 and 4 in which the pair of connectors 6, 7 is in the position of retraction into the base 2, to a retracted configuration, shown in Figures 1 and 3, in which the pair of connectors 6, 7 is in the position of maximum extension out of the base 2. In particular, the pair of pull-out springs 24, 25 passes from the extended configuration to the retracted configuration following the actuation of the unlocking system 13. Furthermore, when the pair of pull-out springs 24, 25 is in the retracted configuration, the connectors 6, 7 are in the position of maximum extension out of the base 2.

The attachment system 1 comprises a pair of compression springs 30, 31, located in the base. Preferably, the pair of compression springs 30, 31 is positioned on the bottom 3. Even more preferably, the pair of compression springs 30, 31 is aligned along the transverse direction Y-Y with the pair of sleeves 48, 49. Furthermore, the spring modulus of the pair of compression springs 30, 31 is greater than the spring modulus of the pair of pull-out springs 24, 25.

The pair of compression springs 30, 31 is configured to compress along the direction of translation X-X under the thrust of the connecting bar 22. Each compression spring 30, 31 comprises a fixed end 32, 33 connected to the bottom 3 and an opposite movable end 34, 35. The movable end 34, 35 is intended to abut with the connecting bar 22.

In particular, when the pull-out springs 24, 25 are in the extended configuration, the compression springs 30, 31 are in a resting configuration. When the compression springs 30, 31 are in the resting configuration, the tensioning cables 8, 9 are in the loose configuration and the connectors 6, 7 in the position of maximum retraction into the base 2.

When the pull-out springs 24, 25 are in the retracted configuration, the connecting bar 22 is abutting with the movable end 34, 35. In this configuration, the pair of compression springs 30, 31 is at least partly compressed, passing from the resting configuration to a compression configuration. Furthermore, when the compression springs 30, 31 are in the compression configuration, the tensioning cables 8, 9 are in the stretched configuration and the connectors 6, 7 are in the maximum extraction position. In other words, the compression springs 30, 31 compress along the direction of translation X-X, passing from the resting configuration to the configuration of at least partial compression, by a distance necessary for the pull-out springs 24, 25 to pass to the retracted configuration and the tensioning cables 8, 9 in the stretched configuration.

During the transition from the extended to the retracted configuration, the pull-out springs 24, 25 assume an intermediate configuration, said partially retracted configuration. It should be noted that when the pull-out springs 24, 25 assume the partially retracted configuration, the connecting bar 22 abuts the free end 34, 35 of the compression springs 30, 31. Furthermore, when the pull-out springs 24, 25 assume the partially retracted configuration, the compression springs 30, 31 are in the resting configuration, since the elastic coefficient of the compression springs 30, 31 is higher than the pull-out springs 24, 25. The connecting bar 22 remains abutting with the free end 34, 35 when the compression springs 30, 31 compress, up to the compression configuration. Furthermore, when the compression springs 30, 31 are in the resting configuration and the pull-out springs 24, 25 in the partially retracted configuration, the tensioning cables 8, 9 are in the loose configuration and the connectors 6, 7 are in a complete extraction position, comprised between the maximum extraction position and the maximum retraction position into the base 2. It should be noted that the tensioning cables 8, 9 have a loose configuration when the connectors 6, 7 assume the full extraction position. In particular, in this position the tensioning cables 8, 9 have a loose configuration, which is intermediate between that which the tensioning cables 8, 9 themselves have when the connectors 6, 7 assume the position of maximum retraction into the base 2, and when the connectors 6, 7 have been released.

It is further an object of the present invention a child car seat (not shown in detail in the appended drawings) comprising the attachment system 1. According to a preferred embodiment, the child car seat comprises a seat arranged to cover the base 2 of the attachment system, a backrest and optionally a headrest cushion. The free end 11 and the pair of connectors 6,7 are accessible to a user since they are at least partially extracted from the base 2. The pair of connectors 6,7 is positioned on the side of the backrest, while the free end 11 is projecting from the opposite side, i.e., near the front portion of the seat.

When a user wants to attach the child car seat to the anchor means of the seat, he presses the unlocking system 13. The belt 10 is thereby capable of sliding, the pull-out springs 24, 25 shorten and pass from the extended configuration to the partially retracted configuration. At the same time, the connectors 6, 7 pass from the position of maximum retraction into the base 2 to the position of complete extraction. The connecting bar 22 comes into abutment with the compression springs 30, 31, which keep the resting configuration. The pair of compression springs 30, 31 prevent the passage of the pull-out springs 24, 25 in the retracted configuration. The connectors 6, 7 are attached by the user to the anchor means of the seat of a car. Preferably, to adjust the position of the child car seat on the seat, the user pulls the belt 10 in the direction that brings the free end 11 away from the base 2 and simultaneously pushes the base 2 against the seat backrest.

Once the use of the child car seat is finished, the user pulls the base 2 along the direction of translation X-X away from the seat while actuating the unlocking system 13. Thereby, the compression springs 30, 31 compress under the action of the connecting bar 22, passing from the resting configuration to the compression configuration. Preferably, the user pulls the child car seat for a preferred distance of five millimetres along the direction of translation X-X to place the compression springs 30, 31 in the compression configuration. When the compression springs 30, 31 reach the compression configuration, the tensioning cables 8, 9 pass from the loose configuration to the stretched configuration, acting on the connectors 6, 7 which are released from the anchor means. Subsequently, the compression springs 30, 31 extend again, pushing and moving the connecting bar 22 towards the front wall by five millimetres, and the tensioning cables 8, 9 pass back into the loose configuration.

## Claims

1. A child car seat attachment system (1), comprising:
- a base (2) comprising a bottom (3), a front wall (4) and an opposite rear wall (5),
- a pair of connectors (6, 7) which are designed to move in a direction of translation (X-X) between a position of maximum extension out of the base (2) to a position of maximum retraction into the base (2), each connector (6, 7) being able to be reversibly attached to anchor means of a car seat,
- a pair of tensioning cables (8, 9) located inside the base (2) and operable on the pair of connectors (6, 7), alternating between a loose configuration and a stretched configuration to release the pair of connectors (6, 7) from the anchor means when the pair of connectors (6, 7) moves to the position of maximum extension from the base (2),
- a belt (10) passing through the front wall (4) and having a first free end (11) projecting out of the base (2), the belt (10) being able to translate in the direction of translation (X-X) to allow the pair of connectors (6, 7) to move in the direction of translation (X-X) between the position of maximum extension from the base (2) and the position of maximum retraction into the base (2),
- a locking mechanism (12) mounted on the base (2) and configured to stop the sliding movement of the belt (10) that brings the free end (11) toward the base (2) and to permit the movement of the belt (10) that brings the free end (11) away from the base (2), the locking mechanism (12) comprising an unlocking system (13) operable to permit the sliding movement of the belt (10) that brings the free end (11) toward the base (2),
**characterized in that** it comprises:
- a pair of rigid rods (14, 15) rigidly joined to the pair of connectors (6, 7) and sliding relative to the base (2) in the direction of translation (X-X), each rigid rod (14, 15) comprising a first connection end (16, 17) connected to a respective connector (6, 7), wherein each tensioning cable (8, 9) comprises a first end (18, 19) at which it is connected proximate the front wall (4) and an opposite second end (20, 21) at which it is connected to a respective connector (6, 7),
- a connecting bar (22) arranged inside the base (2) and designed to move in the direction of translation (X-X), the connecting bar (22) being connected to the second end (23) of the belt (10), opposite to the first end (11), and to the pair of rigid rods (14, 15),
- a pair of pull-out springs (24, 25), each pull-out spring (24, 25) comprising a fixed end (26, 27) connected to the base (2) and an opposite movable end (28, 29) connected to the connecting bar (22), the pair of pull-out springs (24, 25) being configured to reversibly move from an extended configuration, in which the pair of connectors (6, 7) is in the position of retraction into the base (2), to a retracted configuration in which the pair of connectors (6, 7) is in the position of maximum extension out of the base (2), when the unlocking system (13) is actuated.

2. A child car seat attachment system (1) as claimed in claim 1, comprising a pair of compression springs (30, 31) located in the base (2), each compression spring (30, 31) comprising a fixed end (32, 33) connected to the bottom (2) and an opposite movable end (34, 35) which is intended to contact with the connecting bar (22), the pair of compression springs (30, 31) being configured to compress in the direction of translation (X-X) under the thrust of the connecting bar (22) to move the pair of tensioning cables (8, 9) from the loose configuration to the stretched configuration.

3. A child car seat attachment system (1) as claimed in claim 2, wherein the pair of compression springs (30, 31) are reversibly compressed in the direction of translation (X-X) to move the tensioning cables (8, 9) to the stretched configuration to release the pair of connectors (6, 7).

4. A child car seat attachment system (1) as claimed in claim 2 or 3, wherein the connecting bar (22) is configured to abut the pair of compression springs (30, 31) when the pair of pull-out springs (14, 15) are in a partially retracted configuration, intermediate between the extended configuration and the retracted configuration.

5. A child car seat attachment system (1) as claimed in claim 4, wherein the connecting bar (22) abuts the pair of compression springs (30, 31) when the pair of pull-out springs (24, 25) are between the partially retracted configuration and the retracted configuration while the compression springs (30, 31) are compressed.

6. A child car seat attachment system (1) as claimed in any of claims 2 to 5, wherein the spring modulus of the pair of compression springs (30, 31) is greater than the spring modulus of the pair of pull-out springs (24, 25).

7. A child car seat attachment system (1) as claimed in any of claims 1 to 6, comprising a pair of guides (36, 37) which extend in the direction of translation (X-X), each rigid rod (14, 15) being configured to slide along the corresponding guide (36, 37).

8. A child car seat attachment system (1) as claimed in any of claims 1 to 7, wherein
- each rigid rod (14, 15) comprises a through cavity (38, 39) extending in the direction of translation (X-X),
- each tensioning cable (8, 9) extends through the through cavity (38, 39) of the respective rigid rod (14, 15).

9. A child car seat attachment system (1) as claimed in any of claims 1 to 8, wherein the connecting bar (22) comprises a first end (40) and a second end (41), the first end (40) and the second end (41) being connected to their respective rigid rods (14, 15).

10. A child car seat attachment system (1) as claimed in claim 4, wherein the pair of connectors (6, 7) are in a fully extended position, intermediate between the position of maximum extension and the position of maximum retraction into the base (2), when the connecting bar (22) abuts the pair of compression springs (30, 31).

## Patentansprüche

1. Autokindersitz-Anbringungssystem (1), umfassend:
- eine Basis (2), umfassend einen Boden (3), eine Vorderwand (4) und eine gegenüberliegende Rückwand (5),
- ein Paar Verbinder (6, 7), die konstruiert sind, um sich in einer Translationsrichtung (X-X) zwischen einer Position maximaler Erstreckung aus der Basis (2) in eine Position maximalen Einzugs in die Basis (2) zu bewegen, wobei jeder Verbinder (6, 7) in der Lage ist, reversibel an Verankerungseinrichtungen eines Autositzes befestigt zu werden,
- ein Paar Spannkabel (8, 9), die sich innerhalb der Basis (2) befinden und an dem Paar Verbinder (6, 7) betätigbar sind, wobei zwischen einer losen Konfiguration und einer gestreckten Konfiguration gewechselt wird, um das Paar Verbinder (6, 7) von den Verankerungseinrichtungen zu lösen, wenn sich das Paar Verbinder (6, 7) von der Basis (2) in die Position maximaler Erstreckung bewegt,
- einen Riemen (10), der durch die Vorderwand (4) verläuft und ein erstes freies Ende (11) aufweist, das aus der Basis (2) hervorsteht, wobei der Riemen (10) in der Lage ist, in Translationsrichtung (X-X) verschoben zu werden, um es dem Paar Verbinder (6, 7) zu ermöglichen, sich in Translationsrichtung (X-X) zwischen der Position der maximalen Erstreckung aus der Basis (2) und der Position des maximalen Einzugs in die Basis (2) zu bewegen,
- einen Verriegelungsmechanismus (12), der an der Basis (2) montiert und konfiguriert ist, um die Gleitbewegung des Riemens (10), der das freie Ende (11) in Richtung der Basis (2) bringt, anzuhalten und die Bewegung des Riemens (10), der das freie Ende (11) von der Basis (2) weg bringt, zuzulassen, der Verriegelungsmechanismus (12) umfassend ein Entriegelungssystem (13), das betreibbar ist, um die Gleitbewegung des Riemens (10), der das freie Ende (11) in Richtung der Basis (2) bringt, zuzulassen,
**dadurch gekennzeichnet, dass** es Folgendes umfasst:
- ein Paar starrer Stangen (14, 15), die starr mit dem Paar Verbinder (6, 7) verbunden sind und in Bezug auf die Basis (2) in Translationsrichtung (X-X) gleiten, jede starre Stange (14, 15) umfassend ein erstes Verbindungsende (16, 17), das mit einem jeweiligen Verbinder (6, 7) verbunden ist, wobei jedes Spannkabel (8, 9) ein erstes Ende (18, 19), an dem es in der Nähe der Vorderwand (4) verbunden ist, und ein gegenüberliegendes zweites Ende (20, 21), an dem es mit einem jeweiligen Verbinder (6, 7) verbunden ist, aufweist,
- eine Verbindungsstange (22), die innerhalb der Basis (2) angeordnet und konstruiert ist, um sich in Translationsrichtung (X-X) zu bewegen, wobei die Verbindungsstange (22) mit dem zweiten Ende (23) des Riemens (10) gegenüber dem ersten Ende (11) und mit dem Paar starrer Stangen (14, 15) verbunden ist,
- ein Paar Auszugsfedern (24, 25), jede Auszugsfeder (24, 25) umfassend ein festes Ende (26, 27), das mit der Basis (2) verbunden ist, und ein gegenüberliegendes bewegbares Ende (28, 29), das mit der Verbindungsstange (22) verbunden ist, wobei das Paar Auszugsfedern (24, 25) konfiguriert ist, um sich reversibel von einer ausgezogenen Konfiguration, in der das Paar Verbinder (6, 7) in der Position eines Einzugs in die Basis (2) ist, in eine eingezogene Konfiguration zu bewegen, in der das Paar Verbinder (6, 7) in der Position maximaler Erstreckung aus der Basis (2) ist, wenn das Entriegelungssystem (13) betätigt wird.

2. Autokindersitz-Anbringungssystem (1) nach Anspruch 1, umfassend ein Paar Druckfedern (30, 31), die sich in der Basis (2) befinden, jede Druckfeder (30, 31) umfassend ein festes Ende (32, 33), das mit dem Boden (2) verbunden ist, und ein gegenüberliegendes bewegbares Ende (34, 35), das dazu bestimmt ist, mit der Verbindungsstange (22) in Kontakt zu kommen, wobei das Paar Druckfedern (30, 31) konfiguriert ist, um unter dem Druck der Verbindungsstange (22) in Translationsrichtung (X-X) komprimiert zu werden, um das Paar Spannkabel (8, 9) von der losen Konfiguration in die gestreckte Konfiguration zu bewegen.

3. Autokindersitz-Anbringungssystem (1) nach Anspruch 2, wobei das Paar Druckfedern (30, 31) in Translationsrichtung (X-X) reversibel komprimiert wird, um die Spannseile (8, 9) in die gestreckte Konfiguration zu bewegen, um das Paar Verbinder (6, 7) zu lösen.

4. Autokindersitz-Anbringungssystem (1) nach Anspruch 2 oder 3, wobei die Verbindungsstange (22) konfiguriert ist, um an dem Paar Druckfedern (30, 31) anzuliegen, wenn das Paar Auszugsfedern (14, 15) in einer teilweise eingezogenen Konfiguration zwischen der ausgezogenen Konfiguration und der eingezogenen Konfiguration ist.

5. Autokindersitz-Anbringungssystem (1) nach Anspruch 4, wobei die Verbindungsstange (22) an dem Paar Druckfedern (30, 31) anliegt, wenn das Paar Auszugsfedern (24, 25) zwischen der teilweise eingezogenen Konfiguration und der eingezogenen Konfiguration ist, während die Druckfedern (30, 31) komprimiert sind.

6. Autokindersitz-Anbringungssystem (1) nach einem der Ansprüche 2 bis 5, wobei der Federmodul des Paars Druckfedern (30, 31) größer als der Federmodul des Paars Auszugsfedern (24, 25) ist.

7. Autokindersitz-Anbringungssystem (1) nach einem der Ansprüche 1 bis 6, umfassend ein Paar Führungen (36, 37), die sich in Translationsrichtung (X-X) erstrecken, wobei jede starre Stange (14, 15) konfiguriert ist, um entlang der entsprechenden Führung (36, 37) zu gleiten.

8. Autokindersitz-Anbringungssystem (1) nach einem der Ansprüche 1 bis 7, wobei
- jede starre Stange (14, 15) einen durchgehenden Hohlraum (38, 39) umfasst, der sich in Translationsrichtung (X-X) erstreckt,
- sich jedes Spannseil (8, 9) durch den durchgehenden Hohlraum (38, 39) der jeweiligen starren Stange (14, 15) erstreckt.

9. Autokindersitz-Anbringungssystem (1) nach einem der Ansprüche 1 bis 8, wobei die Verbindungsstange (22) ein erstes Ende (40) und ein zweites Ende (41) umfasst, wobei das erste Ende (40) und das zweite Ende (41) mit ihren jeweiligen starren Stangen (14, 15) verbunden sind.

10. Autokindersitz-Anbringungssystem (1) nach Anspruch 4, wobei das Paar Verbinder (6, 7) in einer vollständig ausgezogenen Position zwischen der Position einer maximalen Erstreckung und der Position eines maximalen Einzugs in die Basis (2) ist, wenn die Verbindungsstange (22) an dem Paar Druckfedern (30, 31) anliegt.

## Revendications

1. Système de fixation de siège auto pour enfant (1), comprenant :
- une base (2) comprenant un fond (3), une paroi avant (4) et une paroi arrière opposée (5),
- deux raccords (6, 7) qui sont conçus pour se déplacer dans une direction de translation (X-X) entre une position d'extension maximale hors de la base (2) et une position de rétraction maximale dans la base (2), chaque raccord (6, 7) pouvant être fixé de manière réversible à des moyens d'ancrage d'un siège auto,
- deux câbles tendeurs (8, 9) situés à l'intérieur de la base (2) et actionnables sur les deux raccords (6, 7), alternant entre une configuration lâche et une configuration tendue pour libérer les deux raccords (6, 7) des moyens d'ancrage lorsque les deux raccords (6, 7) se déplacent vers la position d'extension maximale depuis la base (2),
- une sangle (10) traversant la paroi avant (4) et présentant une première extrémité libre (11) faisant saillie hors de la base (2), la sangle (10) étant apte à translater dans la direction de translation (X-X) pour permettre aux deux raccords (6, 7) de se déplacer dans la direction de translation (X-X) entre la position d'extension maximale depuis la base (2) et la position de rétraction maximale dans la base (2),
- un mécanisme de verrouillage (12) monté sur la base (2) et configuré pour arrêter le mouvement coulissant de la sangle (10) qui rapproche l'extrémité libre (11) de la base (2) et pour permettre le mouvement de la sangle (10) qui éloigne l'extrémité libre (11) de la base (2), le mécanisme de verrouillage (12) comprenant un système de déverrouillage (13) pouvant être actionné pour permettre le mouvement coulissant de la sangle (10) qui rapproche l'extrémité libre (11) de la base (2),
**caractérisé en ce qu'**il comprend :
- deux tiges rigides (14, 15) solidaires des deux raccords (6, 7) et coulissant par rapport à la base (2) dans la direction de translation (X-X), chaque tige rigide (14, 15) comprenant une première extrémité de liaison (16, 17) reliée à un raccord respectif (6, 7), dans lequel chaque câble tendeur (8, 9) comprend une première extrémité (18, 19) à laquelle il est relié à proximité de la paroi avant (4) et une seconde extrémité opposée (20, 21) à laquelle il est relié à un raccord respectif (6, 7),
- une barre de liaison (22) agencée à l'intérieur de la base (2) et conçue pour se déplacer dans la direction de translation (X-X), la barre de liaison (22) étant reliée à la seconde extrémité (23) de la sangle (10), opposée à la première extrémité (11), et aux deux tiges rigides (14, 15),
- deux ressorts de retrait (24, 25), chaque ressort de retrait (24, 25) comprenant une extrémité fixe (26, 27) reliée à la base (2) et une extrémité mobile opposée (28, 29) reliée à la barre de liaison (22), les deux ressorts de retrait (24, 25) étant configurés pour se déplacer de manière réversible d'une configuration étendue, dans laquelle les deux raccords (6, 7) sont dans la position de rétraction dans la base (2), à une configuration rétractée dans laquelle les deux raccords (6, 7) sont dans la position d'extension maximale hors de la base (2), lorsque le système de déverrouillage (13) est actionné.

2. Système de fixation de siège auto pour enfant (1) selon la revendication 1, comprenant deux ressorts de compression (30, 31) situés dans la base (2), chaque ressort de compression (30, 31) comprenant une extrémité fixe (32, 33) reliée au fond (2) et une extrémité mobile opposée (34, 35) qui est destinée à entrer en contact avec la barre de liaison (22), les deux ressorts de compression (30, 31) étant configurés pour se comprimer dans la direction de translation (X-X) sous la poussée de la barre de liaison (22) pour déplacer les deux câbles tendeurs (8, 9) de la configuration lâche à la configuration tendue.

3. Système de fixation de siège auto pour enfant (1) selon la revendication 2, dans lequel les deux ressorts de compression (30, 31) sont comprimés de manière réversible dans la direction de translation (X-X) pour déplacer les câbles tendeurs (8, 9) vers la configuration tendue pour libérer les deux raccords (6, 7).

4. Système de fixation de siège auto pour enfant (1) selon la revendication 2 ou 3, dans lequel la barre de liaison (22) est configurée pour venir en butée contre les deux ressorts de compression (30, 31) lorsque les deux ressorts de retrait (14, 15) sont dans une configuration partiellement rétractée, à mi-chemin entre la configuration étendue et la configuration rétractée.

5. Système de fixation de siège auto pour enfant (1) selon la revendication 4, dans lequel la barre de liaison (22) vient en butée contre les deux ressorts de compression (30, 31) lorsque les deux ressorts de retrait (24, 25) sont entre la configuration partiellement rétractée et la configuration rétractée en même temps que les ressorts de compression (30, 31) sont comprimés.

6. Système de fixation de siège auto pour enfant (1) selon l'une quelconque des revendications 2 à 5, dans lequel le module élastique des deux ressorts de compression (30, 31) est supérieur au module élastique des deux ressorts de retrait (24, 25).

7. Système de fixation de siège auto pour enfant (1) selon l'une quelconque des revendications 1 à 6, comprenant deux guides (36, 37) qui s'étendent dans la direction de translation (X-X), chaque tige rigide (14, 15) étant configurée pour coulisser le long du guide correspondant (36, 37).

8. Système de fixation de siège auto pour enfant (1) selon l'une quelconque des revendications 1 à 7, dans lequel
- chaque tige rigide (14, 15) comprend une cavité traversante (38, 39) s'étendant dans la direction de translation (X-X),
- chaque câble tendeur (8, 9) s'étend à travers la cavité traversante (38, 39) de la tige rigide respective (14, 15).

9. Système de fixation de siège auto pour enfant (1) selon l'une quelconque des revendications 1 à 8, dans lequel la barre de liaison (22) comprend une première extrémité (40) et une seconde extrémité (41), la première extrémité (40) et la seconde extrémité (41) étant reliées à leurs tiges rigides respectives (14, 15).

10. Système de fixation de siège auto pour enfant (1) selon la revendication 4, dans lequel les deux raccords (6, 7) sont dans une position complètement étendue, à mi-chemin entre la position d'extension maximale et la position de rétraction maximale dans la base (2), lorsque la barre de liaison (22) vient en butée contre les deux ressorts de compression (30, 31).
